# EUROPEAN PATENT SPECIFICATION

(11) **EP 0 526 932 B1**
(45) Date of publication and mention of the grant of the patent: **22.11.1995**
(21) Application number: 92202233.0
(22) Date of filing: 20.07.1992
(51) Int. Cl.: B01D 27/06, B01D 29/21, F01M 11/03, F16N 39/06

(54) **Disposable oil filter**
Wegwerf-Ölfilter
Filtre d'huile à jeter

(30) Priority: 02.08.1991 GB 9116705
(43) Date of publication of application: 10.02.1993
(73) Proprietor: DELPHI ENERGY AND ENGINE MANAGEMENT SYSTEMS UK OVERSEAS CORPORATION, Detroit Michigan 48202 (US)
(72) Inventor: Kemp, Stanley William, Southampton, Hampshire SO4 3LS (GB); Morris, Stanley Thomas, Southampton, Hampshire SO1 2RA (GB)
(74) Representative: Denton, Michael John

(56) References cited:
- DE-A- 1 905 902
- DE-A- 3 416 304
- GB-A- 2 217 624
- US-A- 4 935 135

## Description

This invention relates to replaceable oil filters for automotive vehicles, and, in particular, to a replaceable oil filter which comprises a pleated paper filter element housed within a removable hollow container adapted to be secured to an internal combustion engine so as to form part of an oil circulation system of that engine.

It is customary for internal combustion engines, particularly four-stroke internal combustion engines, to be provided with a self-contained, internal oil circulation system to lubricate the various moving parts of the engines during the operation thereof. An essential feature of such a self-contained, internal oil circulation system is the provision of some means of keeping the oil in circulation substantially free from solid contaminants, and this is customarily done by providing a means for filtering the oil in circulation, such as a replaceable oil filter comprising a pleated paper filter element housed within a removable hollow container adapted to be secured to the internal combustion engine so as to form part of the oil circulation system of the engine.

One form of replaceable oil filter that is in common use at present is a unitary filter known as a "cartridge" oil filter, in which a pleated paper filter element is completely encased within a hollow metal container, one end of which is provided with a perforated plate which includes a screw-threaded aperture therein which enables the container to be screwed in place on a screw-threaded hollow spigot of an internal combustion engine, and an annular elastomeric gasket surrounding the periphery of said perforated plate which serves to seal the container in an oil-tight manner with a planar area of the engine which surrounds said screw-threaded hollow spigot and contains one or more apertures therein for the oil in circulation in the engine. During operation of the engine, oil from the aperture(s) in this planar area of the engine flows through the perforations in the perforated plate of the cartridge oil filter and into contact with the pleated paper filter element contained within the cartridge oil filter. This oil passes through the pleated paper filter element, which removes the solid contaminants present in the oil, and passes into the interior of a central perforated metal tube of the filter element which is connected to the screw-threaded hollow spigot of the engine. The clean oil collecting in the interior of the central perforated metal tube of the filter element returns to the engine oil circulation system through the screw-threaded hollow spigot of the engine.

It will be appreciated that it will become necessary for such a cartridge oil filter to be replaced when the filter element therein becomes loaded with solid contaminants removed from the oil in circulation to such an extent that filtration of the oil is impaired, and this can be done quickly and effectively by unscrewing the used cartridge oil filter from the screw-threaded hollow spigot of the engine, and replacing it by a new cartridge oil filter. A problem that is now becoming evident, however, is that the used cartridge oil filter cannot readily be recycled or re-used, and is not readily disposable without a risk of potentially degrading the environment, particularly since the unfiltered oil retained in the used cartridge oil filter when that filter is removed from the engine is not readily removable therefrom.

DE-A-34 16 304 discloses an oil filter assembly which includes a filter cartridge in the form of a cylindrical housing with an open end and a closed end and having a bolt-like member extending from the centre of the closed end out of the housing beyond its open end. An annular filter element is disposable within the cartridge. The cartridge is securable within a specially designed coupling flange in the engine block. The cartridge can be released to replace the filter element.

According to the present invention, there is provided an oil filter as specified in claim 1.

The present invention concerns a disposable oil filter which is relatively easy to drain substantially free of used oil and has portions thereof which are readily re-usable, and the remainder thereof which is readily disposable by combustion.

It is possible to provide with the invention an environmentally-friendly alternative to the commercially-available cartridge oil filters used in motor vehicles at present.

Preferably the hollow container is a cylindrical cup-shaped container, the overall shape of the pleated paper filter element is cylindrical about the central tubular support thereof, the peripheral edge of the plate-like member is circular, and the disposable oil filter is fixed in oil-tight sealing contact with a planar area of the engine surrounding said externally screw-threaded hollow spigot by first placing the sealing gasket in position upon the upper face of the plate-like member, placing the plate-like member in position over said planar area of the engine so that the externally screw-threaded hollow spigot passes through the central aperture in the member and the sealing gasket comes into contact with said planar area of the engine, and then threading the fixing nut on to the externally screw-threaded hollow spigot and tightening the nut up until the plate-like member is held in oil-tight sealing contact with the planar area of the engine. Secondly, the pleated paper element is placed within the hollow container so that said central, upwardly-extending bolt member of the base portion of the container passes in sealing contact through the other end of the tubular support, and then the open top of the container is pushed into the cylindrical depending skirting flange of the plate-like member so that the external "O" ring seal is sandwiched between the side walls adjacent the open top of the container and an interior surface of the depending skirting flange of the plate-like member in an oil-tight manner, and the threaded portion of the central, upwardly-extending bolt member of the base portion of the container threadedly engages the internally screw-threaded bore of the opposite end of said apertured fixing nut. Thirdly, the hollow container is then rotated within the depending skirting flange of the plate-like member so that the threaded portion of the central, upwardly-extending bolt member of the base portion of the container is tightened in the internally screw-threaded bore of the opposite end of said apertured fixing nut, the tubular support of the filter element is sealingly engaged at one end with said hollow, apertured fixing nut, and the open top of the container comes into contact with a lower face of the plate-like member.

Advantageously, in a preferred embodiment of the invention described hereinafter, the fixing nut is secured to the externally screw-threaded hollow spigot, on tightening the nut up until the plate-like member is held in oil-tight sealing contact with the planar area of the engine, by any suitable securing means, such as a spring washer between the plate-like member and the fixing nut, or by the use of a proprietary thread-locking medium, such as "Loctite", on the threaded connection between the fixing nut and the hollow spigot. This arrangement allows a used filter element to be replaced by merely unscrewing the hollow container from the fixing nut, removing the used filter element and associated oil from the hollow container, cleaning the container, placing a new filter element in position on the central, upwardly-extending bolt member of the base portion of the container, replacing the external "O" ring seal on the container with a new "O" ring seal, and then screwing the container back in place on the plate-like member.

The invention and how it may be performed are hereinafter particularly described with reference to the accompanying drawings, in which:
Figure 1 shows an exploded, sectional view of a preferred embodiment of a disposable oil filter according to the present invention;
Figure 2 shows a plan view of the assembled oil filter, taken in the direction 2 - 2' shown in Figure 1; and
Figure 3 shows a side view in section of the assembled oil filter of Figure 2, taken in the direction 3 - 3' in Figure 2.

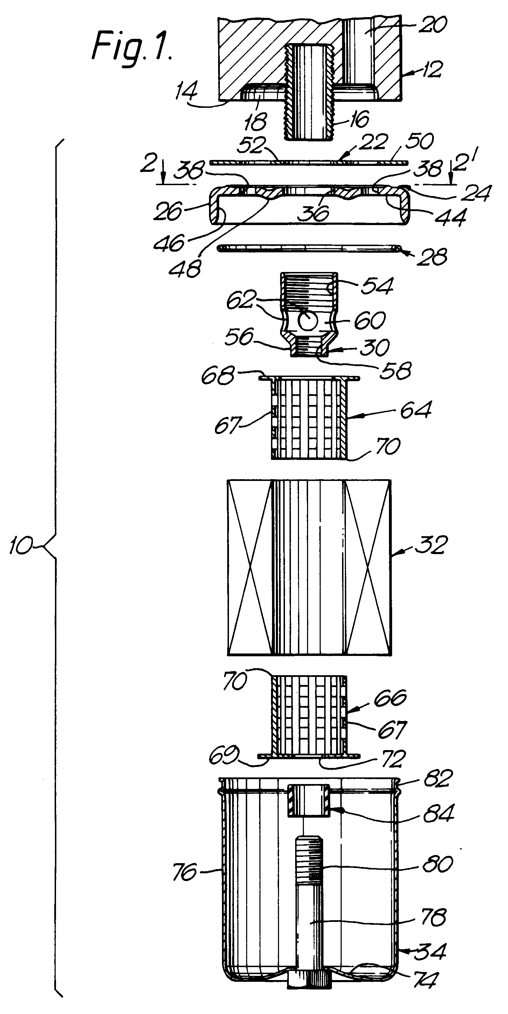

Figure 1 of the drawings shows an exploded view of the components of a disposable oil filter 10 according to the present invention which is adapted to screw in place upon an engine block 12 of an internal combustion engine, the engine block 12 being provided with a substantially planar area 14 in which is centrally located a cylindrical hollow spigot 16, the external surface of which is screw-threaded. The hollow interior of the spigot 16 is connected to an oil circulation system (not shown) formed in the engine block 12 of the internal combustion engine. The substantially planar area 14 of the engine block 12 surrounding the hollow spigot 16 is provided with an annular groove 18 formed therein, and there is a passage 20 within the engine block 12 which connects with this annular groove 18. Passage 20 forms part of the oil circulation system of the internal combustion engine, and provides the means whereby unfiltered, dirty oil from the engine oil circulation system is supplied to the annular groove 18 and thence to the disposable oil filter 10 for filtration thereby and subsequent return of the filtered oil to the engine oil circulation system through the hollow spigot 16.

Turning now to the components of the disposable oil filter 10, this disposable oil filter 10 comprises an upper sealing gasket 22; a circular, plate-like member 24 having a depending solid skirting flange 26 surrounding the periphery thereof; a resilient "O" ring seal 28; a hollow, apertured fixing nut 30; a pleated paper filter element 32; and a hollow, cup-shaped container 34.

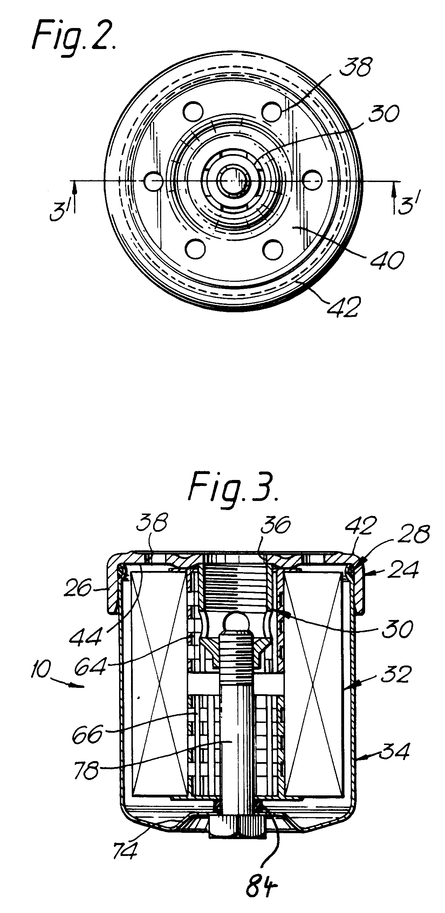

The circular, plate-like member 24 is made of mild steel with a protective finish, and has a central aperture 36 formed therein having a diameter just sufficient to allow the circular plate-like member 24 to be threaded with clearance on to the hollow spigot 16 of the engine block 12. As can best be seen in Figure 2 of the drawings, there are six separate circular apertures 38 formed in the circular, plate-like member 24, equi-distant from one another with the centre of each aperture 38 lying upon a common circle 40 concentric with the central aperture 36. The diameter of this common circle 40 is such that each of the apertures 38 will be positioned directly opposite to a portion of the annular groove 18 in the engine block 12 when the plate-like member 24 is threaded on to the spigot 16 of the engine block 12. The circular, plate-like member 24 also includes an upper face 42 and a lower face 44, and the depending solid skirting flange 26 of the plate-like member 24 has an internal cylindrical surface 46. A ridge 48 is impressed in the plate-like member 24 intermediate the central aperture 36 and the ring of circular apertures 38 for a purpose that will be made clear subsequently in this description.

The upper sealing gasket 22 is made from a commercially-available fibre-reinforced rubber material, and is in the form of an outer annular rim 50, an inner annulus 52, and connecting portions (not shown) connecting the outer annular rim 50 to the inner annulus 52 so as to define apertures between respective connecting portions which, when the upper sealing gasket 22 is placed in a retained position upon the upper face 42 of the plate-like member 24, coincide with one or more of the circular apertures 38 in the plate-like member 24.

The resilient "O" ring seal 28 is a standard "O" ring seal manufactured to BS 4518 standards, and is made from a medium nitrile rubber conforming with BS 5750.

The hollow, apertured fixing nut 30 comprises a mild steel tubular body having a co-axial internally screw-threaded bore 54 formed in one end thereof, which screw-threaded bore 54 is sized to engage the externally screw-threaded hollow spigot 16 on the engine block 12. An opposite end of the fixing nut is shaped with a neck portion 56 which is provided with a co-axial, internally screw-threaded bore 58 therein for a purpose that will be made clear subsequently in this description. The two co-axial bores 54 and 58 communicate with one another via an intermediate chamber 60, the tubular side wall of which is perforated with four cylindrical apertures 62 spaced equi-distant from one another around the tubular side wall.

The pleated paper filter element 32 is a cylindrical element formed from folded, resin-impregnated filter paper in a pleated configuration in which the end pleats are sealed against ingress of oil, and is very similar in shape, size and configuration to a standard, commercially-available filter element as used in the aforesaid replaceable cartridge oil filters. Unlike the commercially-available filter element, however, the pleated paper filter element 32 incorporates a central, apertured tubular support formed from an oil-resistant, combustible material. In this specific embodiment of the present invention, this apertured tubular support comprises two separate portions 64 and 66, each of which is in the shape of an open-ended tube having a perforated side wall 67 and a solid flange 68,69 formed at one end thereof. The perforations in the side wall 67 of each tubular portion 64,66 are arranged in a sequence of circular rows along the length of the tubular portion, the perforations in each row forming a regular pattern around the circumference of the side wall 67. Grooves (not shown) are configured in the external surface of the side wall 67, which grooves connect the apertures in each circular row with one another, and connect each circular row of apertures to one another, so as to ensure that oil filtering through the paper filter element 32 can readily reach the interior of each tubular portion 64,66. As can be seen in Figure 3 of the drawings, each tubular portion 64,66 extends along a central axis of the pleated paper filter element 32 with the solid flange 68,69 thereof in sealing contact with the sealed end pleats of the element 32. In this particular embodiment, the non-flanged ends 70 of the tubular portions 64,66 do not contact one another, but in an alternative embodiment (not shown), these non-flanged ends do contact one another and are configured to engage with one another to form an overall apertured tubular support extending the whole length of the central axis of the pleated paper filter element 32. Alternatively, the pleated paper filter element 32 can be manufactured using a one-piece apertured tubular support formed from an oil-resistant, combustible material in which the end flanges of the tubular support are formed after the tubular support is positioned within the pleated paper filter element 32. The oil-resistant, combustible material can be a synthetic plastics material, such as nylon, or it can be a combustible material, such as cardboard or wood, impregnated with an oil-resistant synthetic resin material. The upper tubular support portion 64 shown in the drawings has an internal bore which is sufficient to allow the hollow, apertured fixing nut 30 to slide therein with a predetermined clearance. The lower tubular support portion 66 has a an internal bore that is similar in size to the internal bore of support portion 64, but the solid end flange 69 thereof also extends across the end of that internal bore in order to define a circular aperture 72 therein which has a smaller diameter than the internal bore of tubular support portion 66.

The hollow, cup-shaped container 34 has a base portion 74 and a tubular side wall 76 extending upwards from the base portion 74 to an open top. The base portion 74 is provided with a central, fixed, upwardly-extending bolt member 78 having an upper free end 80 which is externally screw-threaded to engage the internally screw-threaded bore 58 in the neck portion 56 of the fixing nut 30. The container 34 and the bolt member 78 are both formed from steel, and are brazed together. Alternatively, they could, of course, be joined together by welding, if so desired. A portion of the tubular side wall 76 adjacent the open top of the container 34 is configured externally of the container to produce a sliding fit of that portion within the depending solid flange 26 of the plate-like member 24, and to form an annular groove 82 thereon to securely retain the resilient "O" ring seal in position on that portion of the tubular side wall 76. The diameter of the bolt member 78 ranges from 8mm to 10mm in diameter, and the circular aperture 72 in the solid end flange 69 of the lower tubular support portion 66 is sized so as to sealingly engage the bolt member 78. Additionally, the disposable oil filter 10 includes a tubular rubber spacing gasket 84 which is a sliding fit on the bolt member 78, and is interposed between the solid end flange 69 of the lower tubular support portion 66 and the base portion 74 of the container 34.

The method of assembling this preferred embodiment of the disposable oil filter of the invention will now be described. The disposable oil filter 10 is fixed in oil-tight sealing contact with the planar area 14 of the engine block 12 surrounding the externally screw-threaded hollow spigot 16 by first placing the upper sealing gasket 22 in position upon the upper face 42 of the plate-like member 24, with the apertures defined between the annular rim 50 and the inner annulus 52 of the upper sealing gasket 22 overlying the circular apertures 38 in the plate-like member 24. The plate-like member 24 is then placed in position over the planar area 14 of the engine block 12 so that the externally screw-threaded hollow spigot 16 passes through the central aperture 36 in the plate-like member 24, and the upper sealing gasket 22 comes into contact with the planar area 14 of the engine block 12. The fixing nut 30 is then threaded on to the externally screw-threaded hollow spigot 16 and is tightened up until the plate-like member 24 is held in oil-tight sealing contact with the planar area 14 of the engine block 12. Preferably, the fixing nut 30 is secured to the externally screw-threaded hollow spigot 16, on tightening the nut 30 up until the plate-like member 24 is held in oil-tight sealing contact with the planar area 14 of the engine block 12, by any suitable securing means, such as a spring washer between the plate-like member 24 and the fixing nut 30, or by the use of a proprietary thread-locking medium, such as "Loctite", on the threaded connection between the fixing nut 30 and the hollow spigot 16. Since there is no need to remove the plate-like member 24 from the engine block 12 in order to change the filter element 22, this arrangement avoids any risk of inadvertent removal of the plate-like member 24 during subsequent servicing of the oil filter element 32.

Secondly, the tubular rubber spacing gasket 84 is threaded on the central, upwardly-extending bolt member 78 of the base portion 74 of the container 34, and the pleated paper element 32 is placed within the hollow cup-shaped container 34 so that the central, upwardly-extending bolt member 78 passes in sealing contact through the circular aperture 72 in the end flange 69 of the lower tubular support portion 66, and the tubular rubber spacing gasket 84 is sandwiched between the end flange 69 and the base portion 74 of the container 34. The resilient "O" ring seal 28 is then placed in position within the annular groove 82 formed in the tubular side wall 76 of the container 34, and then the open top of the container 34 is pushed into the cylindrical depending skirting flange 26 of the plate-like member 24 so that the external "O" ring seal 28 is sandwiched between the tubular side wall 76 adjacent the open top of the container 34 and the interior surface 46 of the depending skirting flange 26 of the plate-like member 24 in an oil-tight manner. The threaded portion 80 of the central, upwardly-extending bolt member 78 of the base portion 74 of the container 34 is then threadedly engaged with the internally screw-threaded bore 58 of the fixing nut 30, and the hollow cup-shaped container 34 is then manually rotated within the depending skirting flange 26 of the plate-like member 24 so that the threaded portion 80 of the central, upwardly-extending bolt member 78 is tightened in the internally screw-threaded bore 58, the end flange 68 of the upper tubular support portion 64 of the filter element 32 is sealingly engaged with the annular ridge 48 of the plate-like member 24, and the open top of the container 34 comes into contact with the lower face 44 of the plate-like member 24.

Once the disposable oil filter 10 is in oil-tight contact with the engine block 12, then, during operation of the engine, oil circulating in the engine oil circulation system passes through passage 20 into the annular groove 18 in the engine block 12, and then through the apertures in the upper sealing gasket 22 and the apertures 38 in the plate-like member 24 and into the cup-shaped container 34. This oil then passes through the pleated paper filter element 32, being filtered substantially free of any solid contaminants in the process, and enters the interior of the filter element 32 defined by the interiors of upper and lower tubular support portions 64,66, through the perforated side walls 67 of the upper and lower tubular support portions 64,66. This clean oil then enters the intermediate chamber 60 of the fixing nut 30 through the holes 62, and passes into the interior of the hollow spigot 16 for subsequent re-circulation in the engine oil circulation system.

When it becomes time to service the oil filter 10 or to remove a clogged filter element 32 from the oil filter 10, this can readily be effected by merely unscrewing the hollow cup-shaped container 34 from the fixing nut 30, removing the used filter element 32 and associated oil from the container 34, cleaning the container 34, placing a new filter element 32 in position on the central, upwardly-extending bolt member 78 of the base portion 74 of the container 34, replacing the resilient "O" ring seal 28 on the container 34 with a new "O" ring seal, and then screwing the container 34 back in place on the plate-like member 24. Consequently, the only items of the oil filter which need to be discarded are the used filter element 32 and the used resilient "O" ring seal, and, since these items are both made from combustible materials, they can be readily disposed of by combustion in a suitable furnace, preferably a furnace provided with means for collecting and utilising the heat of combustion of these items for other heating purposes. The oil associated with the used filter element 32 when the container 34 is unscrewed from the fixing nut 30 can either be drained off and re-processed for other lubrication purposes, or be disposed of by combustion in a suitable furnace.

Thus, it can be seen that a disposable oil filter according to the present invention comprises a significant, worth-while advance over the existing commercially-available cartridge oil filters, in that the metallic components of the disposable oil filter are all re-usable and in that the filter element of the disposable oil filter can be cleanly and cost-effectively disposed of by substantially complete combustion thereof in a suitable furnace. Consequently, the disposable oil filter of the invention affords a means of conserving the consumption of raw materials and energy in the production and usage thereof, and a means of dealing with the used, disposable portions of the oil filter cleanly and cost-effectively in a manner which can avoid any potential pollution of the environment by those disposable portions.

## Claims

1. An oil filter for use in an oil circulation system of an internal combustion engine, which oil circulation system includes passages (16, 20) within an engine block (12) of said engine through which oil is conveyed to, and returned from, said oil filter (10) during operation of said engine, said oil filter (10) comprising a hollow, apertured fixing nut (30) having one end thereof which is internally screw-threaded and adapted to be coupled to an externally screw-threaded hollow spigot (16) of said engine block so as to be placed in oil-tight communication with an entry to one of said passages (16, 20) of the oil circulation system, said fixing nut (30) having an opposite end (56) thereof which has an internally screw-threaded bore (58) formed therein, and apertured side walls (60); a disposable pleated paper filter element (32) which includes, extending therethrough, a central, apertured tubular support (64,66) formed from an oil-resistant, combustible material, which receives said hollow, apertured fixing nut (30); a hollow container (34) enclosing said pleated paper filter element, and having a base portion (74), a side wall (76) extending from said base portion to an open end of the container, said base portion being provided with a central, fixed, bolt member (78) extending towards the open end and having a free end (80) externally screw-threaded to engage the internally screw-threaded bore (58) of the opposite end of said apertured fixing nut, and said side wall (76) adjacent said open end of the container being configured to securely retain thereon an external resilient disposable "O" ring seal (28); and a plate-like member (24) including a central aperture (36) in use aligned with said one end of said apertured fixing nut (30), a depending solid skirting flange (26) formed on the peripheral edge of said plate-like member and one or more additional apertures (38) formed between said central aperture (36) and said flange (26) and in use aligned with an entry to another passage of the oil circulation system, said disposable "O" ring seal (28) being adapted to fit slidingly within said solid skirting flange (26) of said plate-like member (24), said hollow, apertured fixing nut (30) has one end thereof engageable with a lower face of said plate-like member; said pleated paper filter element being retained within said container (34) by means of said central, bolt member (78) of the base portion (74) of the container passing in sealing contact through an end (69) of the tubular support (64,66) and into threaded engagement with the internally screw-threaded bore (58) of the opposite end of said apertured fixing nut (30), said external resilient disposable "O" ring seal (28) providing an oil-tight connection between said depending solid skirting flange (26) and said side wall (76) adjacent said open end of the container; and a sealing gasket (22) retainable on an upper face (42) of said plate-like member (24) to surround said one or more additional apertures (38), which sealing gasket (22) is adapted to form an oil-tight seal between said plate-like member (24) and said engine block (12).

2. An oil filter according to claim 1, in which the hollow container (34) is a cylindrical cup-shaped container, the overall shape of the pleated paper filter element (32) is cylindrical about the central tubular support thereof, the peripheral edge (26) of the plate-like member is circular, and the plate-like member is adapted to be fixed in oil-tight sealing contact with a planar area of the engine surrounding said externally screw-threaded hollow spigot (16) by means of said fixing nut.

3. An oil filter according to claim 1 or 2, in which the central tubular support (64,66) of the pleated paper filter element is formed from a synthetic plastics material.

4. An oil filter according to claim 1 or 2, in which the central tubular support (64,66) of the pleated paper filter element is formed from a resin-impregnated cardboard material.

5. An oil filter according to any one of claims 1 to 4, in which the central tubular support of the pleated paper filter element is formed from two perforated tubular support portions (64,66), each of which is provided at one end with a flange (68,69) which sealingly engages a respective end of the pleated paper filter element.

6. An oil filter according to claim 5, in which the other ends (70) of the two perforated tubular support portions are engageable, one with the other, to form the central tubular support of the pleated paper filter element.

7. A method of installing an oil filter according to claim 2 in position upon an engine block (12) of an internal combustion engine which comprises placing the sealing gasket (22) on a planar area of the engine block; placing the plate-like member (24) in position over said planar area of the engine so that the externally screw-threaded hollow spigot (16) passes through the central aperture (36) in the member and the sealing gasket comes into contact with said planar area of the engine; threading the fixing nut (30) on to the externally screw-threaded hollow spigot (16) and tightening the nut (30) up until the plate-like member (24) is held in oil-tight sealing contact with the planar area (14) of the engine block (12); placing the pleated paper filter element (32) within the hollow container (34) so that said central bolt member (78) of the base portion (74) of the container (34) passes in sealing contact through an end of the tubular support (64, 66); pushing the open end of the container into the cylindrical depending skirting flange (26) of the plate-like member (24) so that the external "O" ring seal (28) is sandwiched between the side wall (76) adjacent the open end of the container and an interior surface (46) of the depending skirting flange of the plate-like member in an oil-tight manner, and the threaded portion (80) of the central bolt member (78) of the base portion of the container (34) threadedly engages the internally screw-threaded bore (58) of the opposite end of said apertured fixing nut (30); and then rotating the hollow container within the depending skirting flange (26) of the plate-like member so that the threaded portion (80) of the central bolt member of the base portion (74) of the container is tightened in the internally screw-threaded bore (58) of the opposite end (56) of said apertured fixing nut, the tubular support (64, 66) of the filter element (32) is sealingly engaged at one end with a lower face of said plate-like member (24) around and adjacent said hollow, apertured fixing nut (30), and the open end of the container (34) comes into contact with said lower face (44) of the plate-like member (24).

## Patentansprüche

1. Ein Ölfilter zum Gebrauch in einem Ölkreislaufsystem eines Verbrennungsmotors, wobei das Ölkreislaufsystem Durchgänge (16, 20) innerhalb eines Motorblocks (12) des Motors umfaßt, durch welche während des Motorbetriebs Öl zum Ölfilter (10) gefördert wird bzw. von ihm rückgeführt wird, wobei das Ölfilter (10) umfaßt eine hohle, mit Öffnungen versehene Befestigungsmutter (30), deren eines Ende mit Innenschraubengewinden versehen und ausgelegt ist, um an einem mit Außenschraubengewinden versehenen Zapfen (16) des Motorblocks gekoppelt zu werden und somit in öldichter Kommunikation mit einem Eingang an einem der Durchgänge (16, 20) des Ölkreislaufsystems angeordnet zu werden, wobei ein gegenüberliegendes Ende (56) der Befestigungsmutter (30) mit einer darin ausgebildeten Innengewindebohrung (58) und mit Öffnungen versehenen Seitenwänden (60) ausgebildet ist; ein gefaltetes Wegwerf-Papierfilterelement (32), welches einen zentralen, mit Öffnungen versehenen, rohrförmigen Halter (64, 66) umfaßt, welcher sich dadurch erstreckt, aus einem ölbeständigen, brennbaren Material gebildet ist und die hohle, mit Öffnungen versehene Befestigungsmutter (30) aufnimmt; einen hohlen Behälter (34), welcher das gefaltete Papierfilterelement einschließt und einen Basisteil (74) und eine Seitenwand (76) aufweist, welche sich von dem Seitenteil zu einem offenen Ende des Behälters erstreckt, wobei der Basisteil mit einem zentralen, befestigten Bolzenglied (78) versehen ist, welches sich zu dem offenen Ende erstreckt und ein freies Ende (80) aufweist, welches mit Außenschraubengewinden versehen ist, um mit der Innenschraubengewindebohrung (58) des gegenüberliegenden Endes der mit Öffnungen versehenen Befestigungsmutter in Eingriff zu treten, und wobei die zum offenen Ende des Behälters benachbarte Seitenwand (76) konfiguriert ist, um sichernd darauf eine äußere federnde wegwerfbare O-Ringdichtung (28) zu halten; und ein plattenähnliches Glied (24), welches umfaßt eine zentrale Öffnung (36), welche im Gebrauch mit dem einen Ende der mit Öffnungen versehenen Befestigungsmutter (30) ausgerichtet ist, einen herabhängenden festen umrandenden Flansch (26), welcher auf dem peripheren Rand des plattenähnlichen Gliedes ausgebildet ist, und eine oder mehrere zusätzlichen Öffnungen (38), welche zwischen der zentralen Öffnung (36) und dem Flansch (26) ausgebildet und im Gebrauch mit einem Eingang zu einem anderen Durchgang des Ölkreislaufsystems ausgerichtet sind, wobei die wegwerfbare O-Ringdichtung (28) ausgelegt ist, um gleitend innerhalb des festen umrandenden Flansches (26) des plattenähnlichen Gliedes (24) zu passen, ein Ende der hohlen, mit Öffnungen versehenen Befestigungsmutter (30) mit einer unteren Fläche des plattenähnlichen Gliedes in Eingriff treten kann; das gefaltete Papierfilterelement innerhalb des Behälters (34) mittels des zentralen Bolzengliedes (78) des Basisteils (74) des Behälters gehalten ist, welches in dichtendem Kontakt durch ein Ende (69) des rohrförmigen Halters (64, 66) und in schraubendem Eingriff mit der Innenschraubengewindebohrung (58) des gegenüberliegenden Endes der mit Öffnungen versehenen Befestigungsmutter (30) verläuft, die äußere federnde wegwerfbare O-Ringdichtung (28) eine öldichte Verbindung zwischen dem herabhängenden festen umrandenden Flansch (26) und der Seitenwand (76), welche benachbart zum offenen Ende des Behälters liegt vorsieht; und eine dichtenden Dichtungsscheibe (22), welche auf einer oberen Fläche (42) des plattenähnlichen Gliedes (24) haltbar ist, um die eine oder mehrere zusätzliche Öffnungen (38) zu umgeben, wobei die dichtende Dichtungsscheibe (22) ausgelegt ist, um eine öldichte Dichtung zwischen dem plattenähnlichen Glied (24) und dem Motorblock (12) zu bilden.

2. Ein Ölfilter nach Anspruch 1, in welchem der hohle Behälter (34) ein zylindrischer schalenförmiger Behälter ist; die Gesamtform des gefalteten Papierfilterelements (32) zylindrisch um deren zentralen rohrförmigen Halter ist, der periphere Rand (26) des plattenähnlichen Gliedes kreisförmig ist und das plattenähnliche Glied ausgelegt ist, um in einer öldichten Dichtungsverbindung an einem ebenen Bereich des Motors befestigt zu sein, welcher den äußeren mit Schraubengewinden versehenen, hohlen Zapfen (16) mittels der Befestigungsmutter umgibt.

3. Ein Ölfilter nach Anspruch 1 oder 2, in welchem der zentrale rohrförmige Halter (64, 66) des gefalteten Papierfilterelements aus einem synthetischen Kunststoffmaterial gebildet ist.

4. Ein Ölfilter nach Anspruch 1 oder 2, in welchem der zentrale rohrförmige Halter (64, 66) des gefalteten Papierfilterelements aus einem harzimprägnierten Pappmaterial gebildet ist.

5. Ein Ölfilter nach einem der Ansprüche 1 bis 4, in welchem der zentrale rohrförmige Halter des gefalteten Papierfilterelements aus zwei perforierten rohrförmigen Halteteilen (64, 66) gebildet ist, welche jeweils an einem Ende mit einem Flansch (68, 69) versehen sind, welcher dichtend mit einem jeweiligen Ende des gefalteten Papierfilterelements in Eingriff steht.

6. Ein Ölfilter nach Anspruch 5, in welchem die anderen Enden (70) der zwei perforierten rohrförmigen Halteteile miteinander eingreifbar sind, um den zentralen rohrförmigen Halter des gefalteten Papierfilterelements zu bilden.

7. Ein Verfahren zum Einbau eines Ölfilters nach Anspruch 2 in einer Lage auf einem Motorblock (12) eines Verbrennungsmotors welches die Schritte umfaßt, daß die dichtende Dichtungsscheibe (22) auf einem ebenen Bereich des Motorblocks angeordnet wird; daß das plattenähnliche Glied (24) in einer Lage über dem ebenen Bereich des Motors angeordnet wird, so daß der mit Außenschraubengewinden versehene, hohle Zapfen (16) durch die zentrale Öffnung (36) in dem Glied verläuft und die dichtende Dichtungscheibe in Berührung mit dem ebenen Bereich des Motors gelangt; daß die Befestigungsmutter (30) auf dem mit Außenschraubengewinden versehenen hohlen Zapfen (16) geschraubt wird und daß die Mutter (30) angezogen wird, bis das plattenähnliche Glied (24) in einer öldichten Dichtungsberührung mit dem ebenen Bereich (14) des Motorblocks (12) gehalten wird; daß das gefaltete Papierfilterelement (32) innerhalb des hohlen Behälters (34) angeordnet wird, so daß das zentrale Bolzenglied (78) auf dem Basisteil (74) des Behälters (34) in dichtender Berührung durch ein Ende des rohrförmigen Halters (64, 66) verläuft; daß das offene Ende des Behälters in den zylindrischen herabhängenden umrandenden Flansch (26) des plattenähnlichen Gliedes (24) geschoben wird, so daß die äußere O-Ringdichtung (28) schichtweise zwischen der Seitenwand (76) benachbart zum offenen Ende des Behälters und einer inneren Oberfläche (46) des herabhängenden umrandenden Flansches des plattenähnlichen Gliedes auf eine öldichte Weise angeordnet wird, und daß der mit Gewinden versehene Teil (80) des zentralen Bolzengliedes (78) des Basisteils des Behälters (34) schraubend mit der Innenschraubengewindebohrung (58) des gegenüberliegenden Endes der mit Öffnungen versehenen Befestigungsmutter (30) in Eingriff steht; und daß dann der hohle Behälter innerhalb des herabhängenden umrandenden Flansches (26) des plattenähnlichen Gliedes gedreht wird, so daß der mit Gewinden versehene Teil (80) des zentralen Bolzengliedes des Basisteils (74) des Behälters in der Innenschraubengewindebohrung (58) des gegenüberliegenden Endes (56) der mit Öffnungen versehenen Befestigungsmutter angezogen wird, daß der rohrförmige Halter (64, 66) des Filterelements (32) dichtend an einem Ende mit einer unteren Fläche des plattenähnlichen Gliedes (24) um die höhle, mit Öffnungen versehene Befestigungsmutter (30) herum und dazu benachbart in Eingriff steht und daß das offene Ende des Behälters (34) in Berührung mit der unteren Fläche (44) des plattenähnlichen Gliedes (24) gelangt.

## Revendications

1. Filtre à huile destiné à une utilisation dans un réseau de circulation d'huile d'un moteur à combustion interne, lequel réseau de circulation d'huile comprend des passages (16, 20) situés à l'intérieur d'un bloc-moteur (12) dudit moteur à travers lesquels de l'huile est transportée vers ledit filtre (10) à huile et renvoyée depuis celui-ci au cours du fonctionnement dudit moteur, ledit filtre (10) à huile comprenant un écrou creux (30) de fixation à ouvertures dont une première extrémité est filetée intérieurement et apte à être coupée à un raccord mâle creux (16) fileté extérieurement dudit bloc-moteur de façon à être mis en communication étanche à l'huile avec une entrée menant à l'un desdits passages (16, 20) du réseau de circulation d'huile, ledit écrou (30) de fixation ayant une extrémité opposée (56) qui comporte un alésage (58) fileté intérieurement formé dans sa partie interne, et des parois latérales (60) à ouvertures, un élément (32) de filtre en papier plissé jetable qui comprend, dans une disposition traversante, un support tubulaire (64,66) central à ouvertures formé à partir d'un matériau combustible résistant à l'huile, qui reçoit ledit écrou creux (30) de fixation à ouvertures, un récipient creux (34) renfermant ledit élément de filtre en papier plissé, et ayant une partie (74) de base, une paroi latérale (76) s'étendant depuis ladite partie de base jusqu'à une extrémité ouverte du récipient, ladite partie de base étant dotée d'un élément (78) constituant un boulon central fixe s'étendant vers l'extrémité ouverte et ayant une extrémité libre (80) filetée extérieurement pour venir en prise avec l'alésage (58) fileté intérieurement de l'extrémité opposée dudit écrou de fixation à ouvertures, et ladite paroi latérale (76) adjacente à ladite extrémité ouverte du récipient étant réalisée de façon à retenir solidement sur sa périphérie un joint torique (28) d'étanchéité extérieur, élastique et jetable ; et un élément (24) en forme de plaque comprenant une ouverture centrale (36) alignée, en service, sur ladite première extrémité au nombre d'une dudit écrou (30) de fixation à ouvertures, un rebord (26) périphérique plein rabattu formé sur le bord périphérique dudit élément en forme de plaque et une ou plusieurs ouvertures supplémentaires (38). formées entre ladite ouverture centrale (36) et ladite bride (26) et, alignées, en service, sur une entrée menant à un autre passage du réseau de circulation d'huile, ledit joint torique (28) d'étanchéité jetable étant apte à s'emboîter par glissement à l'intérieur dudit rebord (26) périphérique plein dudit élément (24) en forme de plaque ; ledit écrou creux (30) de fixation à ouvertures a l'une de ses extrémités qui peut venir en engagement avec une face inférieure dudit élément en forme de plaque, ledit élément de filtre en papier plissé étant retenu à l'intérieur dudit récipient (34) au moyen dudit élément (78) constituant un boulon central de la partie (74) de base du récipient passant de manière étanche à travers une extrémité (69) du support tubulaire (64,66) pour venir en prise par vissage avec l'alésage (58) fileté intérieurement de l'extrémité opposée dudit écrou (30) de fixation à ouvertures, ledit joint torique extérieur (28) d'étanchéité, élastique et jetable assurant une connexion étanche à l'huile entre ledit rebord périphérique (26) plein rabattu et ladite paroi latérale (76) adjacente à ladite extrémité ouverte du récipient, et un joint d'étanchéité (22) pouvant être retenu sur une face supérieure (42) dudit élément (24) en forme de plaque pour entourer ladite ou lesdites ouvertures supplémentaires (38), lequel joint (22) d'étanchéité est apte à former un joint étanche à l'huile entre ledit élément (24) en forme de plaque et ledit bloc-moteur (12).

2. Filtre à huile selon la revendication 1, dans lequel le récipient creux (34) est un récipient cylindrique en forme de cloche, la forme globale de l'élément (32) de filtre en papier plissé est cylindrique autour de son support tubulaire central, le bord périphérique (26) de l'élément en forme de plaque est circulaire et l'élément en forme de plaque est apte à être fixé en contact étanche à l'huile, sur une surface plane du moteur qui entoure ledit raccord mâle creux (16) fileté extérieurement, au moyen dudit écrou de fixation.

3. Filtre à huile selon la revendication 1 ou 2, dans lequel le support tubulaire central (64, 66) de l'élément de filtre en papier plissé est formé à partir d'un matériau plastique de synthèse.

4. Filtre à huile selon la revendication 1 ou 2, dans lequel le support tubulaire central (64, 66) de l'élément de filtre en papier plissé est formé à partir d'un matériau en carton imprégné de résine.

5. Filtre à huile selon l'une quelconque des revendications 1 à 4, dans lequel le support tubulaire central de l'élément de filtre en papier plissé est formé à partir de deux parties tubulaires (64, 66) perforées formant support, chacune d'elles étant dotée à l'une de ses extrémités, d'une bride (68, 69) qui vient en position de contact hermétique avec une extrémité respective de l'élément de filtre en papier plissé.

6. Filtre à huile selon la revendication 5, dans lequel les autres extrémités (70) des deux parties tubulaires perforées formant support peuvent être mises en contact, l'une avec l'autre, pour former le support tubulaire central de l'élément de filtre en papier plissé.

7. Procédé pour mettre en place un filtre à huile conforme à la revendication 2 sur un bloc-moteur (12) d'un moteur à combustion interne qui comprend les étapes consistant à :
- placer le joint (22) d'étanchéité sur une surface plane du bloc-moteur,
- mettre l'élément (24) en forme de plaque en place sur ladite surface plane du moteur de telle sorte que le raccord mâle creux (16) fileté extérieurement passe à travers l'ouverture centrale (36) formée dans l'élément et que le joint d'étanchéité vienne en contact avec ladite surface plane du moteur,
- visser l'écrou (30) de fixation sur le raccord mâle creux (16) à filetage extérieur et,
- resserrer l'écrou (30) jusqu'à ce que l'élément (24) en forme de plaque soit maintenu en position de contact hermétique, étanche à l'huile, avec la surface plane (14) du bloc-moteur (12),
- placer l'élément (32) de filtre en papier plissé à l'intérieur du récipient creux (34) de telle sorte que ledit élément (78) de boulon central de la partie (74) de base du récipient (34) passe en position de contact hermétique à travers une extrémité du support tubulaire (64, 66),
- pousser l'extrémité ouverte du récipient à l'intérieur du rebord cylindrique (26) périphérique rabattu de l'élément (24) en forme de plaque de telle sorte que le joint torique extérieur (28) d'étanchéité soit pris en sandwich entre la paroi latérale (76) adjacente à l' extrémité ouverte du récipient et une surface intérieure (46) du rebord périphérique rabattu de l'élément en forme de plaque de manière étanche à l'huile, et la partie filetée (80) de l'élément (78) constituant un boulon central de la partie de base du récipient (34) vienne en prise par vissage avec l'alésage (58) à filetage intérieur de l'extrémité opposée dudit écrou (30) de fixation à ouvertures, et ensuite
- tourner le récipient creux pour le faire pénétrer à l'intérieur du rebord (26) périphérique rabattu de l'élément en forme de plaque de telle sorte que la partie filetée (80) de l'élément de boulon central de la partie (74) de base du récipient soit serrée dans l'alésage (58) taraudé intérieurement de l'extrémité opposée (56) dudit écrou de fixation à ouvertures, le support tubulaire (64, 66) de l'élément (32) formant filtre soit mis en position de contact hermétique, au niveau de l'une de ses extrémités, avec une face inférieure dudit élément (24) en forme de plaque autour et près dudit écrou creux (30) de fixation à ouvertures, et l'extrémité ouverte du récipient (34) vienne en contact avec ladite face inférieure (44) de l'élément (24) en forme de plaque.
